# EUROPEAN PATENT SPECIFICATION

(11) **EP 3 765 929 B1**
(45) Date of publication and mention of the grant of the patent: **09.03.2022**
(21) Application number: 18731930.6
(22) Date of filing: 11.05.2018
(51) Int. Cl.: G05B 19/042

(54) **AUTOMATED SYSTEM AND METHOD FOR UPDATING FIRMWARE ON INDUSTRIAL DEVICES**
AUTOMATISIERTES SYSTEM UND VERFAHREN ZUR AKTUALISIERUNG VON FIRMWARE AUF INDUSTRIELLEN VORRICHTUNGEN
SYSTÈME ET PROCÉDÉ AUTOMATISÉS DE MISE À JOUR DE MICROLOGICIEL SUR DES DISPOSITIFS INDUSTRIELS

(43) Date of publication of application: 20.01.2021
(73) Proprietor: Siemens Aktiengesellschaft, 80333 München (DE)
(72) Inventor: GARRABRANT, Francis C., Johnson City, Tennessee 37615 (US); BRIAN JR., Harry A., Piney Flats, Tennessee 37686 (US); CHIBIZOV, Sergey, Johnson City, Tennessee 37604 (US)
(74) Representative: Isarpatent
(86) International application number: PCT/US2018/032252
(87) International publication number: WO 2019/216909

(56) References cited:
- US-A1- 2003 217 357
- US-B2- 8 869 133

## Description

### BACKGROUND

### 1. Field

Aspects of the present disclosure generally relate to industrial systems and industrial devices, such as for example industrial automation devices, and more particularly to an automated system and method for updating firmware on industrial devices.

### 2. Description of the Related Art

US 8,869,133 B2 relates to a method and a system for use in facilitating patches change management for industrial control systems. US 2003/0217357 A1 relates to monitoring firmware installed on printing devices and document management devices.

Industrial devices, such as for example automation devices and systems, are used in different industrial fields to (automatically) perform a plurality of tasks, for example in a manufacturing process or an assembly line of production facility. Industrial devices can be for example interconnected components, such as for example sensors, actuators and control devices, within an automation system. The control devices can be for example programmable logic controllers (PLCs) for controlling and monitoring process parameters. For example, within an industrial automation system, one or more sensors may be communicatively coupled to one or more PLC(s) via one or more input/output (I/O) modules, e.g., a communication module. Via the I/O modules, the PLC(s) may control one or more devices such as, for example, a rheostat, a switch, a sequencer, a servo drive, a motor, and/or a valve etc. Furthermore, operator terminals provide interfaces to the automation system for monitoring, controlling and displaying information to an operator or end user. Operator terminals are also known as Human-Machine-Interface (HMI) devices which allow effective operation and control of the components and devices of the automation system from the human end, i.e. the operator or end user, while the components/devices of the automation system feed information back to the operator/end user.

Industrial devices, such as for example modules of PLCs, HMI devices, drives, switches etc., typically comprise (micro-) controllers or integrated circuits of various kinds, i.e., generally, processor circuitries, and corresponding firmware for executing specific applications. Firmware is a specific class of software that provides control for the device's specific hardware and is stored in non-volatile memories.

Firmware of industrial devices, or generally devices that comprise firmware, such as embedded systems, may need to be updated from time to time because for example applications or programs executed by the firmware have been improved or modified. Another reason to update firmware is for security purposes, for example to address reported (usually by a vendor) security weakness or issues.

Known firmware update processes on industrial and embedded systems include manual steps and a diverse set of tools. This procedure is time-consuming and errorprone. In an example, to update a device, one may need to perform the following steps:
- connect to a device via vendor specific engineering tool or other network accessible interface to identify current firmware version,
- manually (one device at a time) search vendor website for available patches and updates,
- manually (one device at a time) download latest firmware patch or update,
- manually (one device at a time) apply the patch or update via engineering tool,
- manually (one device at a time) confirm that patch or update is applied correctly via engineering tool.

Thus, there exists a need for an improved system and method for updating firmware, for example updating firmware on multiple devices.

### SUMMARY OF THE INVENTION

The above mentioned problems are solved by the present invention which relates to an automated system, method and computer program for updating firmware on industrial devices as defined in claims 1, 6 and 9, respectively.

A first aspect of the present disclosure provides an automated system for updating firmware on an industrial device, the system comprising: a user interface device storing a computer program with executable instructions; one or more industrial devices comprising firmware; and a communication network interfacing with the user interface device and the industrial device and adapted to transmit data, wherein the computer program of the user interface device comprises instructions to scan the communication network and to identify at least one industrial device that requires an update of the firmware, and wherein the computer program of the user interface device comprises further instructions to update the firmware on the at least one industrial device via the communication network after establishing communication with the industrial device.

A second aspect of the present disclosure provides an automated method for updating firmware on an industrial device, the method comprising: scanning a communication network to identify an industrial device that requires updating of firmware on the industrial device; acquiring update files for the updating of the firmware; establishing communication to the industrial device via the communication network; and updating the firmware on the industrial device via the communication network utilizing the update files.

A third aspect of the present disclosure provides a computer program embodied in a non-transitory computer-readable medium comprising: instructions to scan a communication network to identify an industrial device requiring a firmware update, instructions to acquire update files for the firmware update, instructions to establish communication to the industrial device via the communication network; and instructions to perform the firmware update on the industrial device via the communication network.

### BRIEF DESCRIPTION OF THE DRAWINGS

**FIG. 1** illustrates a schematic diagram of an automated system for updating firmware on industrial devices in accordance with an exemplary embodiment of the present disclosure.
**FIG. 2** illustrates a schematic diagram of a computer program for updating firmware on industrial devices in accordance with an exemplary embodiment of the present disclosure.
**FIG. 3** illustrates a flow chart of an automated method for updating firmware on industrial devices in accordance with an exemplary embodiment of the present disclosure.

### DETAILED DESCRIPTION

To facilitate an understanding of embodiments, principles, and features of the present invention, they are explained hereinafter with reference to implementation in illustrative embodiments. In particular, they are described in the context of industrial devices and systems, and more particularly in the context of systems, methods and computer readable media for updating firmware on industrial devices. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

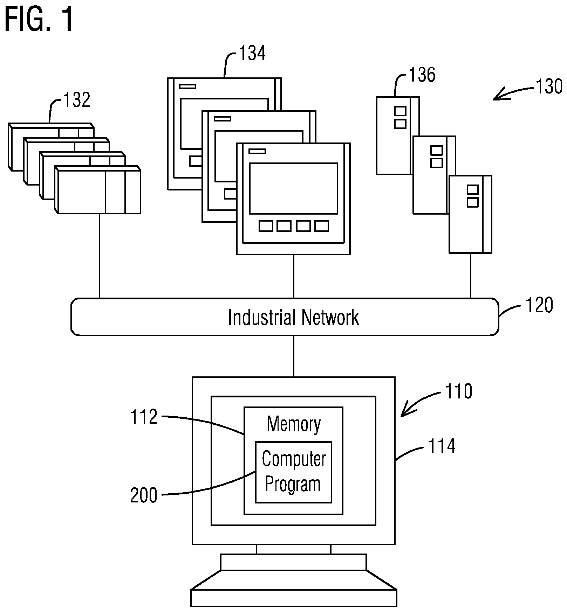

**FIG. 1** illustrates a schematic diagram of a system **100** for updating firmware on devices in accordance with an exemplary embodiment of the present disclosure. The system **100** comprises a user interface device **110,** a communication network **120,** and one or more devices **130.**

The user interface device **110** is a computing device comprising a screen **114** and a memory device **112** storing a computer program **200** with executable instructions, such as program modules. Generally, program modules include routines, programs, programming, objects, components, data, data structures, and the like that perform particular tasks or implement particular abstract data types.

The user interface device **110** can be for example a touch screen device, a tablet, smart phone, personal computer, laptop computer or the like, with storage and wireless capabilities. The memory device **112** of the user interface device **110** is configured as non-volatile, removable, and/or non-removable medium implemented in many methods or technologies for storage of information such as computer-readable instructions, data, data structures, program modules, programs, programming, or routines.

The one or more devices **130** are herein referred to as industrial devices **130.** The one or more industrial devices **130** is/are component(s) of a system, specifically an industrial system, such as an automation system, wherein the industrial devices **130** comprise hardware and software and can be interconnected components of an automation system. For example, the industrial devices **130** can include a sensor, an actuator, a valve, a drive, a field device, a switch, an electric machine such as a motor, a control device such as a programmable logic controller (PLC), a remote input/output (I/O) module, a human machine interface (HMI) device, or other computing device, such as for example a terminal computer, operator panel or inter-process communication (IPC). **FIG. 1** illustrates some examples of industrial devices **130,** such as PLCs **132,** HMI devices **134** and switches **136.**

The communication network **120** interfaces with the user interface device **110** and the industrial devices **130** and is adapted to transmit data. According to an exemplary embodiment, the communication network **130** is an industrial network. The devices **130** and optional further components, such as for example the user interface device **110,** are interconnected via the industrial network **120** for communication purposes. The industrial devices **130** and further components can be connected wirelessly and/or wired within the industrial network **120.**

Industrial networks used in an industrial environment include protocols that provide determinism and real-time control. For example, industrial Ethernet (IE) is the use of Ethernet in an industrial environment with protocols that provide determinism and real-time control. According to an exemplary embodiment, the industrial network **120** comprises industrial Ethernet and operates according to PROFINET protocol. But many other protocols for Industrial Ethernet (IE) may be used, for example EtherCAT, EtherNet/IP, POWERLINK, etc.

In an alternative embodiment, the communication network **120** may not be an industrial network, but a network such as for example the Internet or local area networks, or many other network environments that are accessible via an air interface, e.g. Wi-Fi.

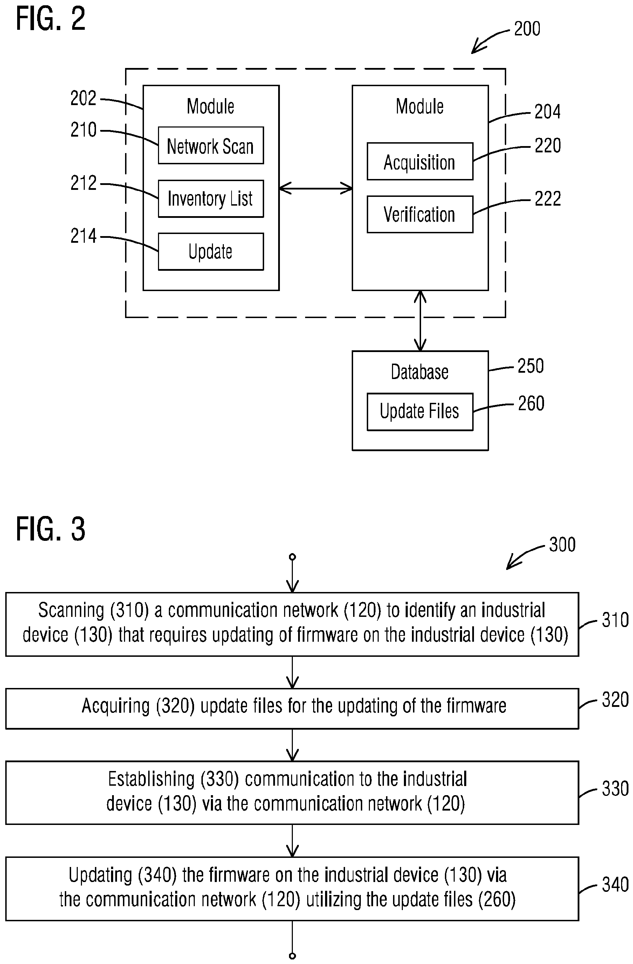

**FIG. 2** illustrates a schematic diagram of a computer program **200** for updating firmware on industrial devices 130 in accordance with an exemplary embodiment of the present disclosure.

As described before, industrial devices **130,** such as for example modules of PLCs, HMI devices, drives, switches etc., typically comprise (micro-) controllers or integrated circuits of various kinds, i.e., generally, processor circuitries, and corresponding firmware for executing specific applications. Firmware is a specific class of software that provides control for the device's specific hardware and is stored in non-volatile memories. Firmware of industrial devices, or generally devices that comprise firmware, such as embedded systems, may need to be updated.

As illustrated in **FIG. 1****,** the user interface device **110** comprises memory device **112** storing computer program **200** with executable instructions, such as for example program modules. Specifically, the computer program **200** includes instructions for performing an automated update of firmware on the industrial devices **130.**

With further reference to **FIG. 2****,** in an exemplary embodiment, the computer program **200** of the user interface device **110** comprises program modules **202** and **204.** Each module **202, 204** comprise instructions, routines etc. to perform specific tasks or objectives. It should be noted that the program **200** may comprise more or less program modules **202, 204.** For example, modules **202, 204** may be combined in one module.

The computer program **200,** for example within module **202,** comprises instructions **210** to scan the communication network **120** and to identify at least one industrial device **130** that requires an update (also referred to as patch) of the firmware on the industrial device **130.** For example, the communication network **120** is scanned and all industrial devices **130** connected with the communication network **120** are identified. Some of the identified devices **130** may need a firmware update and some may not.

Current firmware version information of all identified devices **130** is collected. For example, the computer program **200,** for example within module **202,** comprises instructions **212** to generate an inventory list. The inventory list may list information relating to the current firmware versions of all identified devices **130.**

As **FIG. 2** further illustrates, the described system and method further comprise a database **250,** which comprises all or most of update files or patches with respect to the firmware of the identified industrial devices **130.** The database **250** can be an external database stored or hosted on a separate computer, for example by a firmware provider. In an example, the firmware provider may utilize cloud storage, wherein the update files **260** are stored for example on a server owned and managed by the firmware provider, and the update files **260** can be accessed for example via a cloud storage gateway.

The computer program **200,** specifically module **204,** is configured to access the database **250** and the update files **260.** The program module **204** comprises instructions **220** to acquire update files **260** from the database **250** based on the inventory list previously generated when scanning the network **120.** For example, module **204** may be configured such that the current firmware versions listed in the inventory list are checked or compared with available update files **260** of the database **250** to determine whether firmware update files **260** are available with respect to the identified devices **130.** This means, that the program **200** includes functionality to associate available patches or update files **260** with the information collected during the network scan.

The inventory list comprising current firmware versions of all identified devices **130** is supplemented or complemented with available patches or update files **260.** For example, there may be updated files **260** available for all identified devices **130** or only for some identified devices **130.** The inventory list indicates which devices **130** can be updated with respect to firmware.

In an exemplary embodiment, the inventory list comprising information relating to current firmware versions and available update files **260** of the devices **130** is displayed on screen **114** of the user interface device **110** to a user. Further, the user can be provided with a flexible device update selection. For example, the user may select which firmware versions of which devices **130** should be updated.

After selection of available update files **260** by the user, the module **204** is configured to acquire and/or download the corresponding update files **260.** The computer program **200,** specifically module **204,** comprises further instructions **222** to verify integrity of the update files **260.** For example, integrity may be verified by determining that the update files **260** are not faulty and/or compatible with the identified industrial devices **130.**

After the update files **260** are acquired and verified, module **202** comprises instructions **214** to update the firmware for those industrial devices **130,** that were identified during the network scan, firmware update files **260** are available and selected to be updated by the user. The module **202** is configured to update the firmware via the communication network **120** after establishing communication with the corresponding industrial devices **130.**

In an exemplary embodiment, upon completion of the firmware update(s), a report can be generated comprising for example identification (ID) of the devices **130** that were updated, performed operations, timestamps and firmware versions. Of course, such a report may comprise other data/information and can be modified as required. The report can be displayed to the user on the user interface device **110.**

**FIG. 3** illustrates a flow chart of a method **300** for updating firmware on industrial devices **130** in accordance with an exemplary embodiment of the present disclosure. The method **300** provided herewith refers to the components and elements as described before with reference to **FIG. 1** and **FIG. 2****.**

In an example, a user may want to perform firmware updates of industrial devices **130** connected with communication network **120.** The user starts computer program **200** comprising multiple instructions **210, 212, 214, 220, 222.** After activating the program **200,** in a first step **310,** a network scan of the communication network **120** is performed to identify industrial device(s) **130** that are connected with the network **120** and may need a patch or update of the firmware on the industrial device **130.** An inventory list may be generated comprising information/data of current firmware versions of all identified devices **130.**

Database **250** comprising patches or update files **260** is accessed and available patches or update files **260** are associates with the information/data of firmware versions collected during the network scan and provided in the inventory list. The inventory list is now supplemented or modified with the available patches or update files **260.** The complete list is then displayed to the user via screen **114** of the user interface device **110.** The method **300** is configured such that the user can select if all available patches or update files **260** should be applied or if only some firmware updates should be applied. After selecting which devices **130** should be updated, in step **320,** the corresponding update files **260** are acquired, for example downloaded to user interface device **110,** from the database **250** and verified.

In step **330,** communication to those industrial devices **130** which are to be updated is established via the network **120,** and, in step **340,** the firmware on the industrial devices is updated via the network **120** and utilizing the update files **260.** Upon completion of the updating **340,** a report is created and displayed to the user comprising for example IDs of devices **130,** performed operations, timestamps and firmware versions.

It should be appreciated that the described method **300** can comprise more steps, or some steps can be repeated multiple times, or some steps are optional. For example, displaying the inventory list to the user can be optional and the method **300** configured such that the updating is performed for all available patches/update files **260** automatically.

The described system **100,** computer program **200** and method **300** provide a single, easy to use and fully automated solution for updating firmware on devices **130.** Specifically, multiple devices **130** can be updated simultaneously. Further, user errors are reduced and a unified firmware update process across multiple device families including an improved documentation of the update process is provided.

## Claims

1. An automated system (100) for updating firmware on an industrial device (130), the system (100) comprising:
a user interface device (110) storing a computer program (200) with executable instructions (210, 212, 214, 220, 222);
one or more industrial devices (130), which are selected from a programmable logic controller (132), a human machine interface device (134), a switch (136), an electric machine, a sensor, an actuator, and a combination thereof, comprising firmware; and
a communication network (120), which is an industrial network, interfacing with the user interface device (110) and the one or more industrial devices (130) and adapted to transmit data, **characterized in that**
the computer program (200) of the user interface device (110) comprises instructions (210) to scan the communication network (120) and to identify at least one industrial device (130) that requires an update of the firmware, and
wherein the computer program (200) of the user interface device (110) comprises further instructions (214) to update the firmware on the at least one industrial device (130) via the communication network (120) after establishing communication with the
at least one industrial device (130),
wherein the computer program (200) of the user interface device (110) comprises further instructions (212) to generate an inventory list comprising current firmware versions and/or update files (260) for the at least one industrial device (130), and
wherein the computer program (200) comprises further instructions (220) to acquire the update files based on the inventory list.

2. The system of Claim 1, wherein the communication network (120) comprises one or more industrial Ethernet protocols.

3. The system of Claim 1 or 2, wherein the user interface device (110) is selected from a desktop computer, a tablet, a smart phone, and a handheld computing device.

4. The system (100) of Claim 1, further comprising an external database (250) comprising the update files (260), the computer program (200) being configured to access the external database (250).

5. The system (100) of one of the preceding Claims 1 or 4, wherein the computer program (200) of the user interface device (110) comprises further instructions (222) to verify integrity of the update files (260).

6. An automated method (300) for updating firmware on an industrial device (130), the method (300) comprising:
scanning (310) a communication network (120), which is an industrial network, to identify an industrial device (130) that requires updating of firmware on the industrial device (130), wherein the industrial devices (130) is selected from a programmable logic controller (132), a human machine interface device (134), a switch (136), an electric machine, a sensor, an actuator, and a combination thereof;
generating an inventory list comprising update files (260) required for the updating of the firmware on the industrial device (130);
acquiring (320) the update files based on the inventory list;
establishing (330) communication to the industrial device (130) via the communication network (120); and
updating (340) the firmware on the industrial device (130) via the communication network (120) utilizing the update files (260).

7. The automated method (300) of Claim 6, further comprising:
verifying integrity of the update files (260) of the inventory list.

8. The automated method (300) of one of the preceding Claims 6 or 7, wherein the communication network (120) comprises one or more industrial Ethernet protocols.

9. A computer program (200) embodied in a non-transitory computer-readable medium comprising instructions which, when executed by a computer, cause the computer to carry out the steps of the automated method of claim 6.

10. The computer program (200) of Claim 9, wherein the non-transitory computer-readable medium is stored in a memory (112) of a user interface device (110).

## Patentansprüche

1. Automatisiertes System (100) zur Aktualisierung von Firmware auf einer industriellen Vorrichtung (130), wobei das System (100) umfasst:
eine Benutzerschnittstellenvorrichtung (110), die ein Computerprogramm (200) mit ausführbaren Anweisungen (210, 212, 214, 220, 222) speichert;
eine oder mehrere industrielle Vorrichtungen (130), die aus einer programmierbaren logischen Steuerung (132), einer Mensch-Maschine-Schnittstellenvorrichtung (134), einem Schalter (136),
einer elektrischen Maschine, einem Sensor, einem Stellglied und
einer Kombination davon ausgewählt sind, die Firmware umfassen; und
ein Kommunikationsnetzwerk (120), das ein industrielles Netzwerk ist, das mit der Benutzerschnittstellenvorrichtung (110) und der einen oder mehreren industriellen Vorrichtung(en) (130) eine Schnittstelle bildet und angepasst ist, um Daten zu übertragen,
**dadurch gekennzeichnet, dass**
das Computerprogramm (200) der Benutzerschnittstellenvorrichtung (110) Anweisungen (210) umfasst, um das Kommunikationsnetzwerk (120) zu scannen und
mindestens eine industrielle Vorrichtung (130) zu identifizieren, die eine Aktualisierung der Firmware erfordert, und
wobei das Computerprogramm (200) der Benutzerschnittstellenvorrichtung (110) weitere Anweisungen (214) umfasst, um die Firmware auf der mindestens einen industriellen Vorrichtung (130) über das Kommunikationsnetzwerk (120) zu aktualisieren, nachdem eine Kommunikation mit der mindestens einen industriellen Vorrichtung (130) hergestellt wird,
wobei das Computerprogramm (200) der Benutzerschnittstellenvorrichtung (110) weitere Anweisungen (212) umfasst, um eine Bestandsliste zu erzeugen, die aktuelle Firmware-Versionen und/oder Aktualisierungsdateien (260) für die mindestens eine industrielle Vorrichtung (130) umfasst, und
wobei das Computerprogramm (200) weitere Anweisungen (220) umfasst, um die Aktualisierungsdateien basierend auf der Bestandsliste zu erfassen.

2. System nach Anspruch 1, wobei das Kommunikationsnetzwerk (120) ein oder mehrere industrielle Ethernet-Protokolle umfasst.

3. System nach Anspruch 1 oder 2, wobei die Benutzerschnittstellenvorrichtung (110) aus einem Desktop-Computer, einem Tablet, einem Smartphone und einer tragbaren Rechenvorrichtung ausgewählt ist.

4. System (100) nach Anspruch 1, das ferner eine externe Datenbank (250) umfasst, die die Aktualisierungsdateien (260) umfasst, wobei das Computerprogramm (200) dazu ausgelegt ist, auf die externe Datenbank (250) zuzugreifen.

5. System (100) nach einem der vorhergehenden Ansprüche 1 oder 4, wobei das Computerprogramm (200) der Benutzerschnittstellenvorrichtung (110) weitere Anweisungen (222) zum Verifizieren der Integrität der Aktualisierungsdateien (260) umfasst.

6. Automatisiertes Verfahren (300) zur Aktualisierung von Firmware auf einer industriellen Vorrichtung (130), wobei das Verfahren (300) umfasst:
Scannen (310) eines Kommunikationsnetzwerks (120), das ein industrielles Netzwerk ist, um eine industrielle Vorrichtung (130) zu identifizieren, die eine Aktualisierung der Firmware auf der industriellen Vorrichtung (130) erfordert, wobei die industrielle Vorrichtung (130) aus einer programmierbaren logischen Steuerung (132), einer Mensch-Maschine-Schnittstellenvorrichtung (134), einem Schalter (136), einer elektrischen Maschine, einem Sensor, einem Stellglied und einer Kombination davon ausgewählt ist;
Erzeugen einer Bestandsliste, die Aktualisierungsdateien (260) umfasst, die für die Aktualisierung der Firmware auf der industriellen Vorrichtung (130) erforderlich sind;
Erfassen (320) der Aktualisierungsdateien basierend auf der Bestandsliste;
Herstellen (330) einer Kommunikation mit der industriellen Vorrichtung (130) über das Kommunikationsnetzwerk (120); und
Aktualisieren (340) der Firmware auf der industriellen Vorrichtung (130) über das Kommunikationsnetzwerk (120) unter Verwendung der Aktualisierungsdateien (260).

7. Automatisiertes Verfahren (300) nach Anspruch 6, ferner umfassend:
Verifizieren der Integrität der Aktualisierungsdateien (260) der Bestandsliste.

8. Automatisiertes Verfahren (300) nach einem der vorhergehenden Ansprüche 6 oder 7, wobei das Kommunikationsnetzwerk (120) ein oder mehrere industrielle Ethernet-Protokolle umfasst.

9. Computerprogramm (200), das in einem nichtflüchtigen computerlesbaren Medium enthalten ist und Anweisungen umfasst, die, wenn sie von einem Computer ausgeführt werden, den Computer veranlassen, die Schritte des automatisierten Verfahrens nach Anspruch 6 durchzuführen.

10. Computerprogramm (200) nach Anspruch 9, wobei das nichtflüchtige computerlesbare Medium in einem Speicher (112) einer Benutzerschnittstellenvorrichtung (110) gespeichert ist.

## Revendications

1. Système automatisé (100) pour mettre à jour un micrologiciel sur un dispositif industriel (130), le système (100) comprenant :
un dispositif d'interface utilisateur (110) stockant un programme informatique (200) avec des instructions exécutables (210, 212, 214, 220, 222) ;
un ou plusieurs dispositifs industriels (130), qui sont sélectionnés parmi un contrôleur logique programmable (132),
un dispositif d'interface homme-machine (134), un commutateur (136), une machine électrique, un capteur, un actionneur, et une combinaison de ceux-ci, comprenant un micrologiciel ; et
un réseau de communication (120), qui est un réseau industriel, faisant interface avec le dispositif d'interface utilisateur (110) et les un ou plusieurs dispositifs industriels (130), et adapté pour transmettre des données,
**caractérisé en ce que** le programme informatique (200) du dispositif d'interface utilisateur (110) comprend des instructions (210) pour balayer le réseau de communication (120) et pour identifier au moins un dispositif industriel (130) qui nécessite une mise à jour du micrologiciel, et
où le programme informatique (200) du dispositif d'interface utilisateur (110) comprend d'autres instructions (214) pour mettre à jour le micrologiciel sur l'au moins un dispositif industriel (130) par l'intermédiaire du réseau de communication (120) après avoir établi une communication avec l'au moins un dispositif industriel (130),
où le programme informatique (200) du dispositif d'interface utilisateur (110) comprend d'autres instructions (212) pour générer une liste d'inventaire comprenant les versions actuelles du micrologiciel et/ou des fichiers de mise à jour (260) pour l'au moins un dispositif industriel (130), et
où le programme informatique (200) comprend d'autres instructions (220) pour acquérir les fichiers de mise à jour sur la base de la liste d'inventaire.

2. Système selon la revendication 1, dans lequel le réseau de communication (120) comprend un ou plusieurs protocoles Ethernet industriels.

3. Système selon la revendication 1 ou la revendication 2, dans lequel le dispositif d'interface utilisateur (110) est sélectionné parmi un ordinateur de bureau, une tablette, un téléphone intelligent et un dispositif informatique de poche.

4. Système (100) selon la revendication 1, comprenant en outre une base de données externe (250) comprenant les fichiers de mise à jour (260), le programme informatique (200) étant configuré pour accéder à la base de données externe (250) .

5. Système (100) selon l'une des revendications précédentes 1 ou 4, dans lequel le programme informatique (200) du dispositif d'interface utilisateur (110) comprend des instructions supplémentaires (222) pour vérifier l'intégrité des fichiers de mise à jour (260).

6. Procédé automatisé (300) pour mettre à jour un micrologiciel sur un dispositif industriel (130), le procédé (300) comprenant les étapes suivantes :
balayer (310) un réseau de communication (120), qui est un réseau industriel, pour identifier un dispositif industriel (130) qui nécessite la mise à jour d'un micrologiciel sur le dispositif industriel (130), où le dispositif industriel (130) est sélectionné parmi un contrôleur logique programmable (132), un dispositif d'interface homme-machine (134), un commutateur (136), une machine électrique, un capteur, un actionneur, et une combinaison de ceux-ci ;
générer une liste d'inventaire comprenant des fichiers de mise à jour (260) requis pour la mise à jour du micrologiciel sur le dispositif industriel (130) ;
acquérir (320) les fichiers de mise à jour sur la base de la liste d'inventaire ;
établir (330) une communication avec le dispositif industriel (130) par l'intermédiaire du réseau de communication (120) ; et
mettre à jour (340) le micrologiciel sur le dispositif industriel (130) par l'intermédiaire du réseau de communication (120) en utilisant les fichiers de mise à jour (260) .

7. Procédé automatisé (300) selon la revendication 6, comprenant en outre l'étape suivante :
vérifier l'intégrité des fichiers de mise à jour (260) de la liste d'inventaire.

8. Procédé automatisé (300) selon l'une des revendications précédentes 6 ou 7, dans lequel le réseau de communication (120) comprend un ou plusieurs protocoles Ethernet industriels.

9. Programme informatique (200) intégré sur un support non transitoire lisible par ordinateur, comprenant des instructions qui, lorsqu'elles sont exécutées par un ordinateur, amènent l'ordinateur à exécuter les étapes du procédé automatisé de la revendication 6.

10. Programme informatique (200) selon la revendication 9, dans lequel le support non transitoire lisible par ordinateur est stocké dans une mémoire (112) d'un dispositif d'interface utilisateur (110).
